# EUROPEAN PATENT SPECIFICATION

(11) **EP 3 042 425 B1**
(45) Date of publication and mention of the grant of the patent: **23.08.2017**
(21) Application number: 14771211.1
(22) Date of filing: 02.09.2014
(51) Int. Cl.: H02G 5/02

(54) **SUPPORT INSULATOR FOR CONDUCTIVE BARS AND RESPECTIVE CABINET AND ELECTRICAL PANEL.**
STÜTZISOLATOR FÜR STROMSCHIENEN UND JEWEILIGEN SCHALTSCHRANK UND ELEKTRISCHE TAFEL.
SUPPORT ISOLATEUR POUR DES BARRES CONDUCTRICES ET CABINET ET PANNEAU ÉLECTRIQUE RESPECTIVES.

(30) Priority: 05.09.2013 IT MI20130305
(43) Date of publication of application: 13.07.2016
(73) Proprietor: ABB S.p.A., 20124 Milano (IT)
(72) Inventor: BENEDETTI, Pierceleste, I-22030 Orsenigo (CO) (IT); CAGLIANI, Daniele, I-23847 Molteno (LC) (IT); TAGLIABUE, Andrea, I-20831 Seregno (MI) (IT)
(74) Representative: De Bortoli, Eros
(86) International application number: PCT/EP2014/068632
(87) International publication number: WO 2015/032764

(56) References cited:
- FR-A1- 2 717 635

## Description

The present invention relates to an isolator for supporting conductive bars in an electrical panel cabinet.

As is known, electrical panels, for example switchboards for the distribution of electrical energy or for automation, comprise a cabinet with a frame defining an internal space for housing one or more of the panel's electrical and/or electronic devices; for example, the frame of a low-voltage distribution panel houses electrical switching devices, such as switches. Generally, the frame of the electrical panel has a parallelepiped structure defined by a plurality of framing elements operatively connected to one another.

It is also known that among the elements housed inside the electrical panel cabinet there are conducting bars ("busbars"), the function of which is to distribute electrical energy to the panel's various electrical and/or electronic devices.

In particular, these conductive bars are connected to a corresponding pole of the electricity supply network associated with the panel; the connection between the conductive bars and the devices of the electrical panel is achieved by means of specific conductors, such as lamina for example, specifically shaped according to the type of electrical device involved.

Inside the cabinet, the conductive bars are operatively coupled with specific support devices made of an insulating material; these devices allow the bars to be connected to a support structure, typically a cross member connected to the frame of the cabinet. In this way, any electro-dynamic stresses produced by the flow of current through the conductive bars are discharged onto the stronger cabinet structure.

Given the current state-of-the-art, the use of known types of support devices presents several problems and disadvantages.

In particular, the support device comprises a plurality of bearing surfaces that support a plurality of first conductive bars, positioning them at a predetermined first distance with respect to the electrical devices to which the electrical energy needs to be distributed; consequently, the conductors for the connection between the electrical devices and the first conductive bars are sized to cover this first distance.

For applications requiring a greater amount of current associated with the supply network, the number of conductive bars supported by the support device is typically doubled, by adding second conductive bars which are placed above the first conductive bars already mounted on the corresponding bearing surfaces.

In his way, these second conductive bars are positioned at a second distance with respect to the electrical devices, which is different from the first distance between the first conductive bars and the electrical devices.

Consequently, the electrical conductors for connecting the electrical devices need to be modified or replaced to cover the second distance and reach the second conductive bars, which involves additional costs and interventions. FR2717635A1 discloses a support insulator of known type The object of the present invention is to provide a support isolator for conductive bars that enables the disadvantages described for the state-of-the-art to be overcome.

This object is achieved by a support isolator for conductive bars in an electrical panel cabinet, wherein the cabinet comprises at least one framing element with a first wall and a second wall connected to one another transversally. The isolator comprises:
- at least one bearing surface on which a conductive bar can be mounted;
- a first surface and a second surface that are transversally connected to one another and adapted to be operatively coupled with the first wall and the second wall of the framing element, respectively; and
- a third surface and a fourth surface that are transversally connected to one another and adapted to be operatively coupled with the first wall and the second wall of the framing element, respectively.

The first surface, the third surface and said at least one bearing surface lie on planes parallel to one another, and the planes on which the first surface and the third surface lie are at a distance from one another, so that:
- following coupling of the first surface and the second surface with the first wall and the second wall of the framing element, the conductive bar can be mounted on the bearing surface separated from the first wall by a first minimum distance; and
- following coupling of the third surface and the fourth surface with the first wall and the second wall of the framing element, the conductive bar can be mounted on the bearing surface separated from the first wall by a second minimum distance, which is smaller than the first minimum distance.

Another aspect of the present invention is that of providing a panel for an electrical cabinet such as the cabinet described in the accompanying claims and described below.

A further aspect of the present invention is that of providing an electrical panel comprising a cabinet such as the cabinet described in the accompanying claims and described below.

Further characteristics and advantages will become more evident from the following description of preferred but not exclusive embodiments of a support isolator for conductive bars and relative electrical cabinet and panel, illustrated by way of non-limiting example in the accompanying drawings, wherein:
- figure 1 shows a perspective view of an isolator according to the present invention;
- figures 2 and 3 show an overhead view and a frontal view of the isolator illustrated in figure 1;
- figures 4 and 5 show the isolator illustrated in figure 1 coupled with a framing element from a cabinet for an electrical panel according to a first operating position, in which the isolator supports two conductive bars that are coupled to it by means of fixing means illustrated in figure 4 and by means of a first isolating cover illustrated in figure 5;
- figures 6 and 7 show the isolator illustrated in figure 1 coupled with the framing element according to a second operating position, in which, with respect to the first operating position illustrated in figures 4 and 5, the isolator supports another two conductive bars that are coupled to it by means of fixing means illustrated in figure 6 and by means of a second isolating cover illustrated in figure 7;
- figures 9 and 8 show perspective views of a cabinet for an electrical panel and relative framing, respectively;
- figure 10 shows a plan view of the framing illustrated in figure 8, in which a first isolator and a second isolator according to the present invention are coupled with a first framing element and a second framing element, respectively, according to a first operating position in which the first isolator and the second isolator support a predetermined number of conductive bars that extend between the first framing element and the second framing element;
- figure 11 shows a plan view of the framing illustrated in figure 8, in which the first isolator and the second isolator illustrated in figure 10 are coupled with the respective first framing element and second framing element according to a second operating position in which the number of conductive bars supported by the first isolator and by the second isolator is doubled;
- figure 12 is a cross-section view of the framing element illustrated in the previous figures.

It must be underlined that in the following detailed description, components that are identical or similar, whether from a structural and/or functional point of view, have the same numerical references, regardless of whether they are shown in different embodiments; it must also be underlined that, in order to clearly and concisely describe the present invention, the drawings may not necessarily be to scale and certain characteristics of the description may be illustrated in a rather schematic form.

Furthermore, when the term "adapted", "configured" or "shaped" is used in the description to refer to each component considered whole, or to any part of the component, or to an entire combination of components, or even to each part of a combination of components, it must be understood that the term signifies and correspondingly comprises both the structure, and/or the configuration and/or the form and/or the positioning of the relative component or part thereof, or the combination of components or part thereof, to which the term refers.

Lastly, when the term transversal or transversally is used in the following description, it indicates a direction not parallel to the element or direction to which it refers, and perpendicularity should be considered a specific case of transversal direction.

The present invention relates to a support isolator for conductive bars 50, 51 in a cabinet 200 for an electrical panel, referred to as a whole in the aforementioned figures with the reference number 1 and hereafter referred to for simplicity as "isolator 1".

The conductive bars 50, 51 are adapted to distribute electrical energy to the various electrical and/or electronic devices installed in the cabinet 200; in particular, the conductive bars 50, 51 operatively supported by the isolator 1 are electrically connected to the same pole of the electricity supply network associated with the electrical panel.

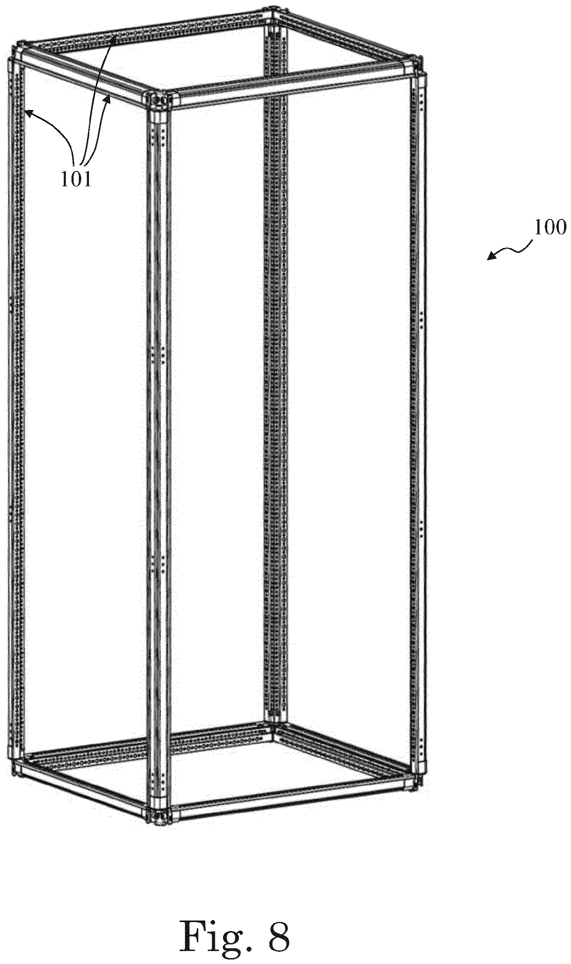

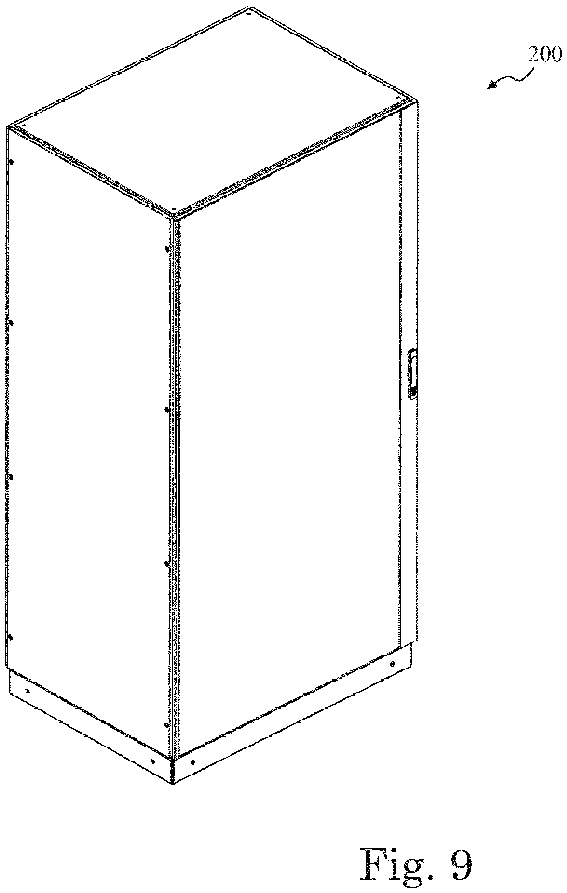

With particular reference to figures 8 and 9, the cabinet 200 comprises a frame 100, preferably in the form of a parallelepiped, which is achieved by operatively connecting to one another a plurality of elements 101, hereafter referred to as "framing elements 101".

The isolator 1 is adapted to be operatively coupled with a corresponding framing element 101 that comprises, along its longitudinal length, at least one first wall 150 and a second wall 151 transversally connected to one another.

The first wall 150 and the second wall 151 of the framing element 101 shown by way of example in the aforementioned figures form a corner that is positioned centrally in the front portion of the framing element 101, i.e. in the portion of the framing element 101 adapted to be turned towards the internal space of the cabinet 200.

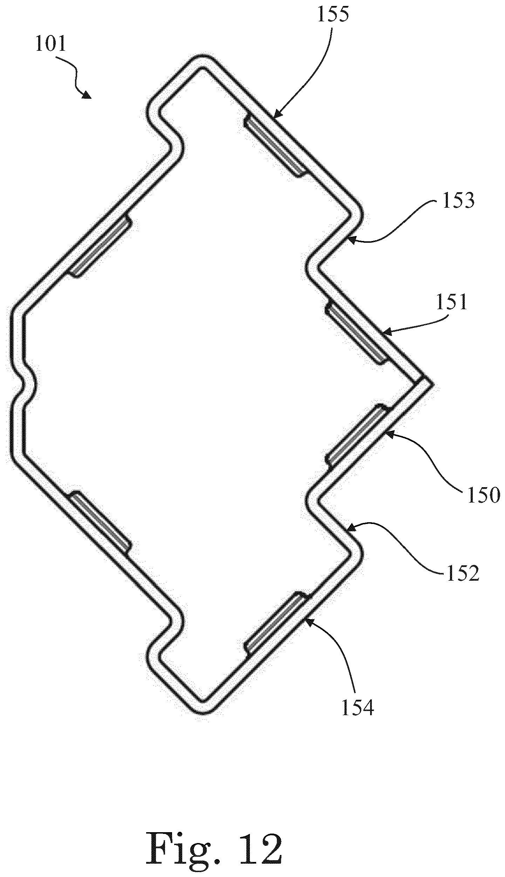

In the preferred embodiment illustrated in figure 12, the front portion of the framing element 101 also comprises at least one third wall 152 that is transversally connected to the first wall 150, and a fourth wall 153 that is transversally connected to the second wall 151 and, more preferably, also comprises a fifth wall 154 and a sixth wall 155. The fifth wall 154 and the sixth wall 155 are transversally connected to the third wall 152 and to the fourth wall 153, respectively, so as to form with them a first corner and a second corner that are located to the side of the central corner formed by the first wall 150 and the second wall 151.

Furthermore, a row of holes 160 is defined along the longitudinal length of at least the first wall 150 and the second wall 151, to receive respective fixing means 170.

To couple with the respective framing element 101, the isolator 1 comprises at least:
- a first surface 10 and a second surface 11 that are transversally connected to one another and adapted to be operatively coupled with the first wall 150 and with the second wall 151 of the framing element 101, respectively; and
- a third surface 12 and a fourth surface 13 that are transversally connected to one another and adapted to be operatively coupled with the first wall 150 and the second wall 151 of the framing element 101, respectively.

The first surface 10 and the third surface 12 lie on planes parallel to one another.

The isolator 1 also comprises at least one bearing surface 20, 21 onto which a respective first conductive bar 50 can be mounted.

Said at least one bearing surface 20, 21 is defined in the isolator 1 so as to lie on a plane parallel to the planes on which the first surface 10 and the third surface 12 lie.

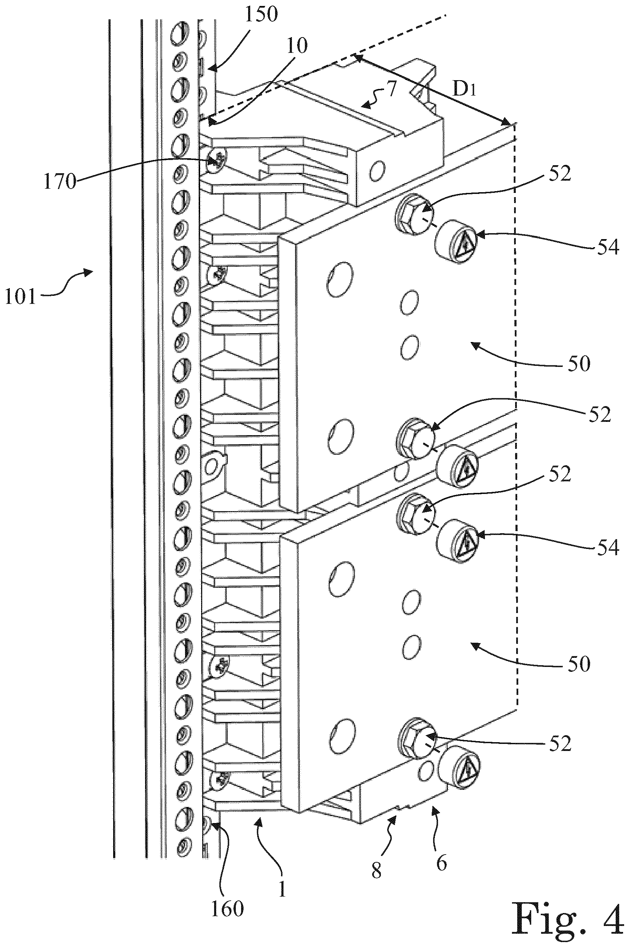

Preferably, as illustrated for example in figures 4-7, said at least one bearing surface 20, 21 is defined in the isolator 1 so that the respective first conductive bar 50 extends transversally with respect to the longitudinal extension of the framing element 101 with which the isolator 1 is operatively coupled.

The planes on which the first surface 10 and the third surface 12 of the isolator 1 lie are separated from one another so that:
- following coupling of the first surface 10 and the second surface 11 of the isolator 1 with the first wall 150 and the second wall 151 of the framing element 101, the first conductive bar 50 can be mounted on the respective bearing surface 20, 21 separated from the first wall 150 by a first minimum distance D₁; and
- following coupling of the third surface 12 and the fourth surface 13 of the isolator 1 with the first wall 150 and the second wall 151 of the framing element 101, the first conductive bar 50 can be positioned on the respective bearing surface 20, 21 separated from the first wall 150 by a second minimum distance D_{2,} which is smaller with respect to the first minimum distance D₁.

In practice, the isolator 1 according to the present invention is advantageously adapted to assume, with respect to the framing element 101, a first operating position in which its first and second surfaces 10 and 11 are operatively coupled with the respective first and second walls 150 and 151 of the framing element 101, or a second operating position in which its third and fourth surfaces 12 and 13 are operatively coupled with the respective first and second walls 150, 151.

The switch from the first operating position to the second operating position involves a backward movement of said at least one bearing surface 20, 21 and relative first conductive bar 50 towards the framing element 101, a backward movement which is due to the difference in level between the planes on which the first surface 10 and the third surface 12 lie.

In particular, for current values for the electrical supply network associated with the electrical panel that are not particularly high, for example below 2500 A, one or more first conductive bars 50 mounted on the respective bearing surfaces 20, 21 of the isolator 1 are sufficient to conduct the current of the respective network polarity.

In this condition, with reference to figures 4-5 and 10, the isolator 1 may be operatively coupled with the respective framing element 101 according to the aforementioned first operating position, so that its first conductive bars 50 can be positioned on the respective bearing surfaces 20, 21 at the first minimum distance D₁ with respect to the first wall 150 of the framing element 101.

For higher current values for the electrical supply network, second conductive bars 51 can be added and electrically operatively connected to the first conductive bars 50, so that they can conduct the current from the same network polarity.

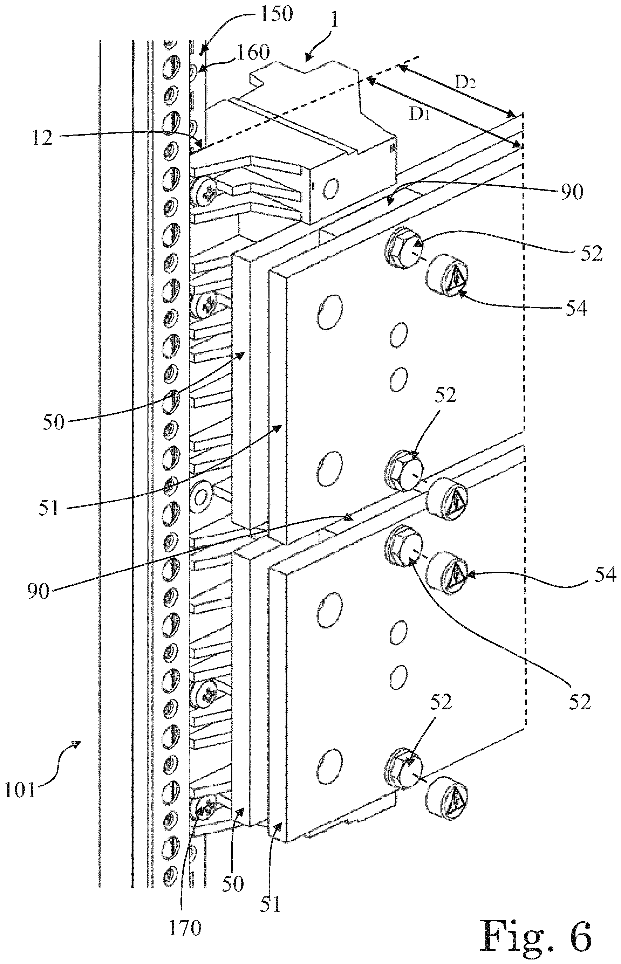

In this condition, with reference to figures 6-7 and 11, the isolator 1 may advantageously be operatively coupled with the respective framing element 101 according to the aforementioned second operating position, so that its first conductive bars 50 can be positioned on the respective bearing surfaces 20, 21 at the second minimum distance D₂ with respect to the first wall 150 of the framing element 101, and so that its second conductive bars 51 can be operatively coupled with the isolator 1 parallel to and facing the respective first conductive bars 50, and separated from the first wall 150 of the framing element 101 by a distance substantially equal to the first minimum distance D₁.

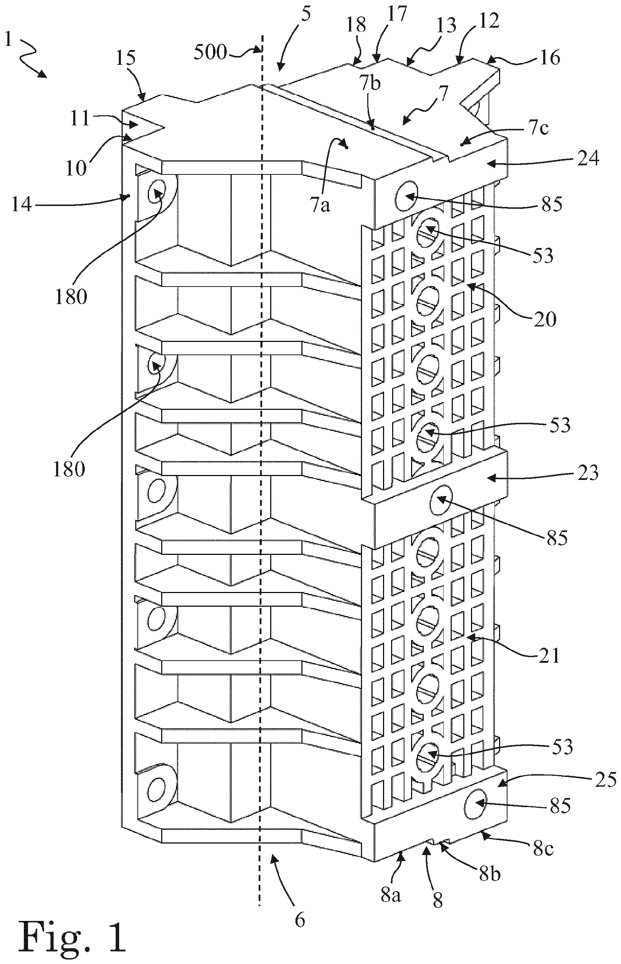

In the embodiment shown by way of example in the aforementioned figures, the isolator 1 comprises a first face 5 and a second face 6 that are opposite each other and delimit the longitudinal extension of the isolator 1 along a main axis represented by a broken line and indicated by the reference number 500 in figure 1.

The surfaces 10, 11, 12 and 13 extend along this main axis 500.

Furthermore, the isolator 1 comprises two bearing surfaces 20 and 21, on each of which a respective first conductive bar 50 can be placed; in particular, in the example illustrated in the aforementioned figures, the two bearing surfaces 20 and 21 are separated by a central partition 23 and delimited by another two partitions 24 and 25 arranged opposite the central partition 23, near the first face 5 and the second face 6, respectively.

The two first conductive bars 50 mounted on the respective bearing surfaces 20 and 21 are electrically connected to the same polarity of the electricity supply network and are preferably electrically connected to one another by means of one or more conducting elements, for example placed between them.

Preferably, the bearing surfaces 20 and 21 lie substantially on a same plane, which is parallel to and separated from the planes on which the first surface 10 and the third surface 12 of the isolator 1 lie, and the plane on which the third surface 12 lies is situated between the planes on which the first surface 10 and the two bearing surfaces 20, 21 lie.

Furthermore, the first and second surfaces 10, 11 are defined in a first part 2 of the isolator 1 and the third and fourth surfaces 12, 13 are defined in a second part 3 of the isolator 1 opposite the first part 2 with respect to the bearing surfaces 20, 21. Therefore, to move the isolator 1 between the aforementioned first operational position and the second operational position with respect to the framing element 101, the isolator 1 simply needs to be overturned by rotating it through 180°.

A first row of through-holes 180 and a second row of through-holes 181 are defined along the main axis 500, corresponding to the first surface 10 and the third surface 12, respectively. In particular, the through-holes 180 are defined so that they can be aligned with corresponding holes 160 in the first wall 150 of the framing element 101, when the first and second surfaces 10 and 11 of the isolator 1 are coupled with the respective first and second walls 150, 151. In the same way, the through-holes 181 are defined so as to be able to be aligned with corresponding holes 160 in the first wall 150, when the third and fourth surfaces 12 and 13 of the isolator 1 are coupled with the respective first and second walls 150, 151 of the framing element 101.

In this way, fixing means, such as screws 170, can be inserted into the through-holes 180 aligned with the holes 160, to fix the isolator 1 to the framing element 101 according to the first operating position, or they can be inserted into the through-holes 181 aligned with the holes 160, to fix the isolator 1 to the framing element 101 according to the second operating position.

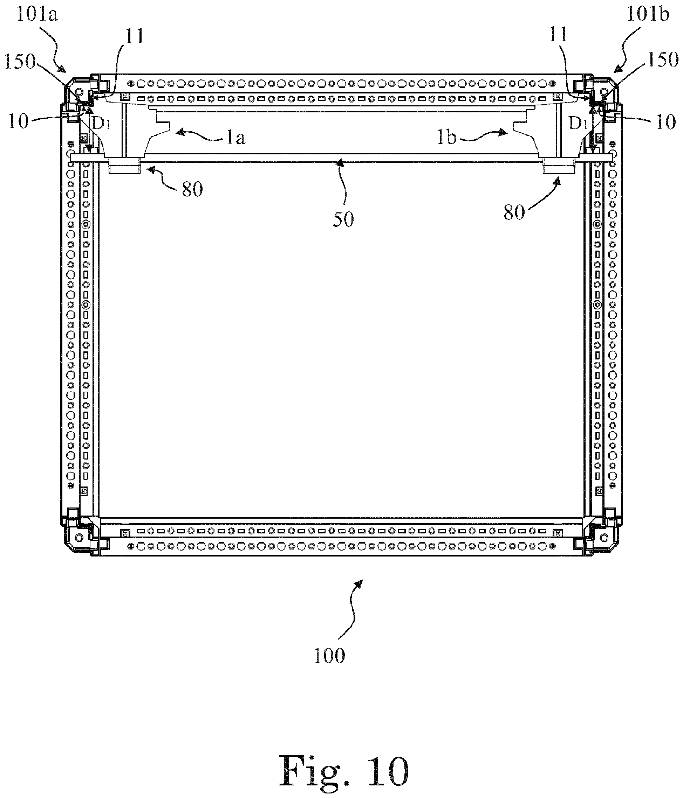

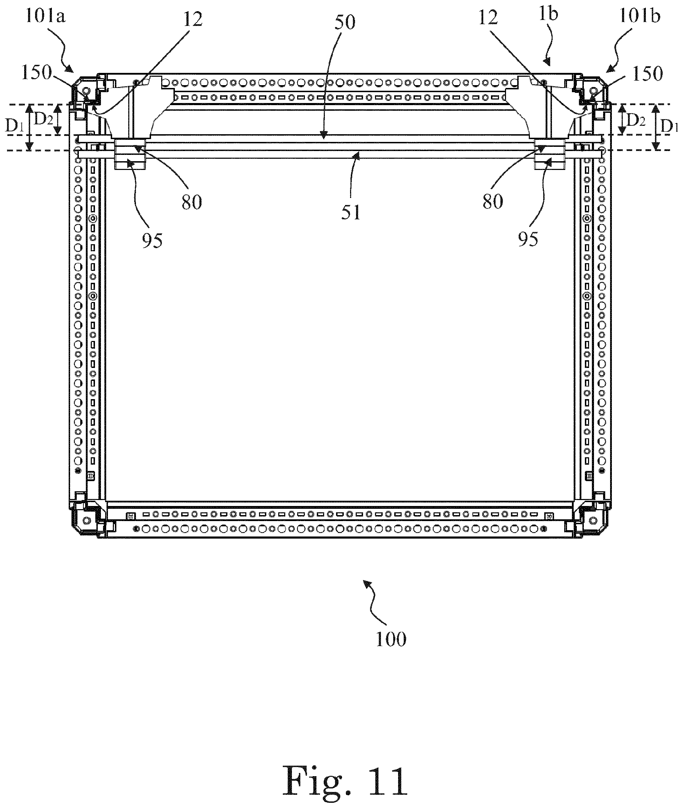

In the embodiment illustrated in the aforementioned figures, the isolator 1 also comprises:
- a fifth surface 14 and a sixth surface 15 that extend along the main axis 500 and are transversally connected to the first surface 10 and to the second surface 11, respectively, so that they are adapted to be operatively coupled with the third wall 152 and the fourth wall 153, respectively, of the framing element 101, when the first and second surfaces 10 and 11 are coupled with the respective first and second walls 150 and 151 (as illustrated, for example, in figure 10); e
- a seventh surface 16 and an eighth surface 17 that extend along said main axis 500 and are transversally connected to the third surface 12 and to the fourth surface 13, respectively, so that they are adapted to be operatively coupled with the third wall 152 and the fourth wall 153, respectively, of the framing element 101, when the third and fourth surfaces 12 and 13 are coupled with the respective first and second walls 150 and 151 (as illustrated, for example, in figure 11).

The fifth surface 14 and the sixth surface 15, like the seventh surface 16 and the eighth surface 17, make the coupling between the isolator 1 and the respective framing element 101 more stable and effective.

This coupling can be further improved by the presence of an additional surface transversally connected to the fifth surface 14 and adapted to be coupled with the fifth wall 154 of the framing element 101, and/or a further surface transversally connected to the fifth surface 15 and adapted to be coupled with the sixth wall 155, and/or a further surface transversally connected to the seventh surface 16 and adapted to be coupled with the fifth wall 154, and/or a further surface transversally connected to the eighth surface 17 and adapted to be coupled with the sixth wall 155.

For example, in the embodiment illustrated in the aforementioned figures, the isolator 1 comprises a ninth surface 18 that extends along the main axis 500 and is transversally connected to the eighth surface 17, so as to be coupled with the sixth wall 155 when the first and second surfaces 10 and 11 are coupled with the first and second walls 150 and 151 (as illustrated, for example, in figure 11).

Preferably, the first face 5 of the isolator 1 comprises at least one step-shape portion 7, and the second face 6 comprises at least one step-shape portion 8.

In particular, the step-shape portion 7 is defined by surfaces 7a, 7b, 7c which lie on planes that are separate and parallel to one another and transversal with respect to the first and second surfaces 10, 11 and to the third and fourth surfaces 12, 13; the step-portion 8 of the second face 6 is defined by surfaces 8a, 8b, 8c which lie on planes that are separate and parallel to one another and transversal with respect to the first and second surfaces 10, 11 and to the third and fourth surfaces 12, 13.

With reference to figures 4-11, the present invention also relates to a cabinet 200 for an electrical panel comprising at least one isolator 1 operatively coupled with one of its framing elements 101.

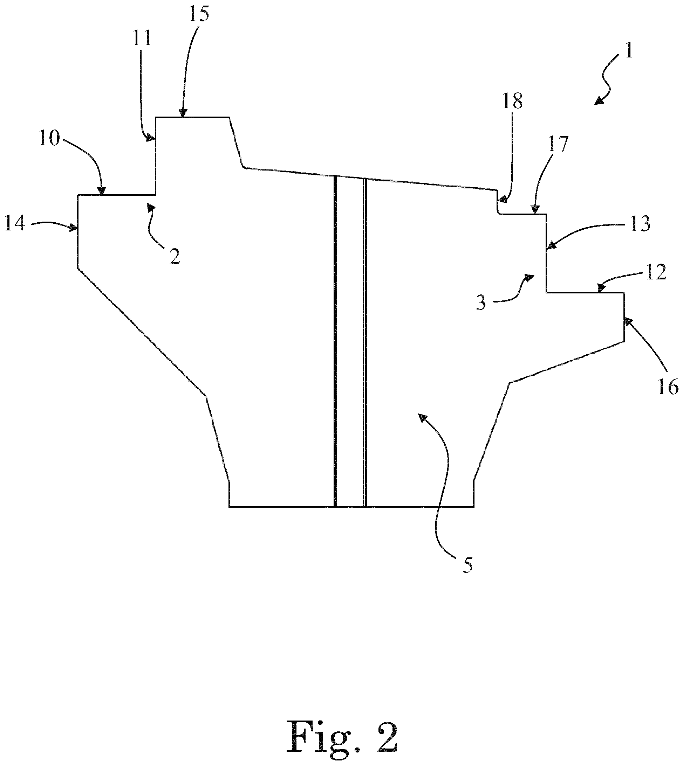

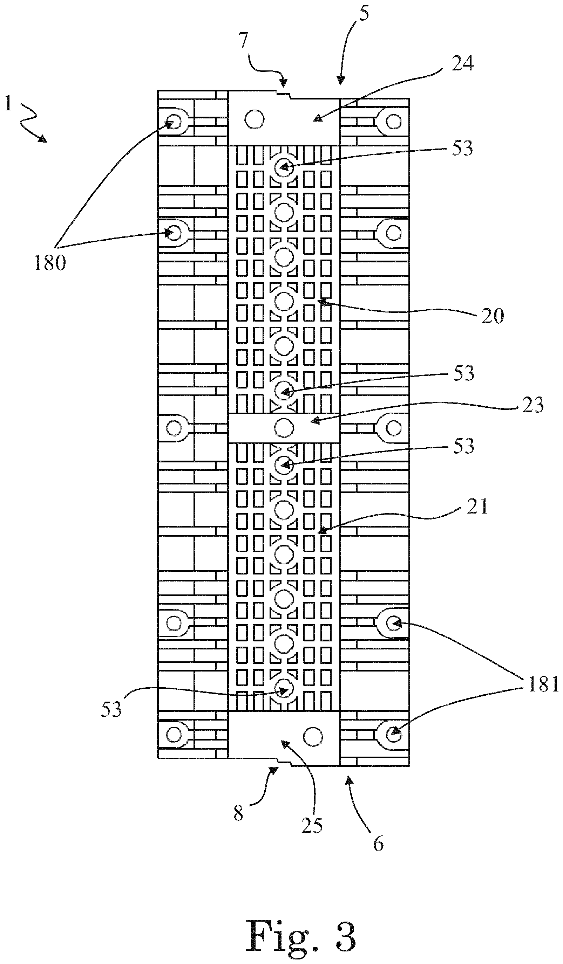

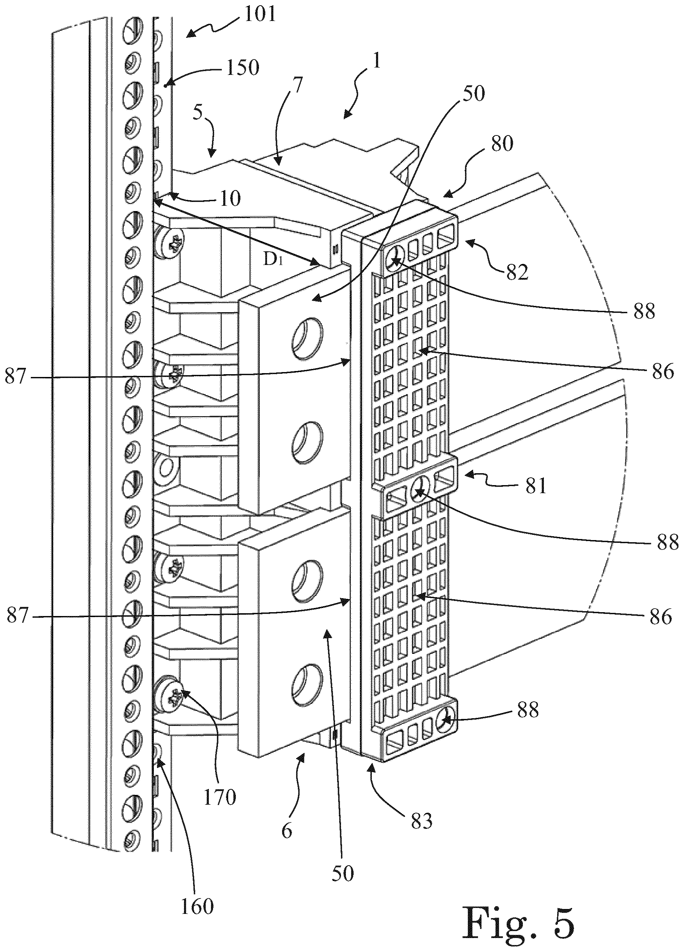

According to the previous description, in the event of current supply values that are not particularly high, said at least one isolator 1 is operatively coupled with the respective framing element 101 according to the aforementioned first operating position. In particular, in this first operating position, the first surface 10 and the second surface 11 of the isolator 1 are operatively coupled with the first wall 150 and with the second wall 151, respectively, of the framing element 101, so that the first conductive bars 50 mounted on the respective bearing surfaces 20 and 21 are separated from the first wall 150 by the first minimum distance D₁. Figures 4 and 5 show, for example, the isolator 1 according to the embodiment shown by way of example in figures 1-3, wherein this isolator 1 is coupled with the respective framing element 101 according to the first operating position, and wherein the two first conductive bars 50 resting on the two respective bearing surfaces 20 and 21 are separated from the first wall 150 of the framing element 101 by the first minimum distance D₁.

In particular, the two first conductive bars 50 shown in figure 4 are passed through by fixing means, such as screws 52, which are inserted into respective holes 53 defined in the bearing surfaces 20 and 21, so as to fix the first bars 50 to the isolator 1.

Preferably, isolating caps 54 are inserted into the heads of the screws 52 so as to cover them and indicate them to an operator.

The two first conductive bars 50 illustrated in figure 5, on the other hand, are coupled with the isolator 1 through a first isolating cover 80 which is operatively coupled with the isolator 1 so as to cover a respective portion of each of the first conductive bars 50 and keep these bars 50 mounted on the respective bearing surfaces 20 and 21.

In particular, the first isolating cover 80 illustrated comprises a central partition 81 and another two partitions 82 and 83 opposite one another with respect to the central partition 81. These partitions 81, 82 and 83 are adapted to be mounted on the partitions 23, 24 and 25, respectively, of the isolator 1 and to be passed through by fixing means, such as screws, which are inserted in respective holes 88 defined in the partitions 23, 24, 25, so as to fix the first isolating cover 80 to the isolator 1.

Also on the heads of these screws, protruding from the holes 88, it is preferable to place isolating caps, such as the caps 54, since, even if the screws are not in contact with the first conductive bars 50, they are positioned to be close to them and may carry a current.

The first isolating cover 80 also comprises two first faces 87, separated from the central partition 81, which are facing and cover respective portions of the two first conductive bars 50 mounted on the bearing surfaces 20 and 21. The first isolating cover 80 further comprises two second faces 86 which are separated from the central partition 81 and opposite the first faces 87.

In the case of higher current supply values, said at least one isolator 1 is operatively coupled with the respective framing element 101 of the cabinet 200 according to the aforementioned second operating position. In particular, in this second operating position, the third surface 12 and the fourth surface 13 of the isolator 1 are operatively coupled with the first wall 150 and with the second wall 151, respectively, of the framing element 101, so that the first conductive bars 50 mounted on the respective bearing surfaces 20 and 21 are separated from the first wall 150 by the second minimum distance D₂, which is smaller with respect to the first minimum distance D₁.

Furthermore, second conductive bars 51 are operatively coupled with the isolator 1 in the second operating position, parallel with and facing the respective first conductive bars 50 and separated from the first wall 150 of the framing element 101 by a distance substantially equal to the first minimum distance D₁.

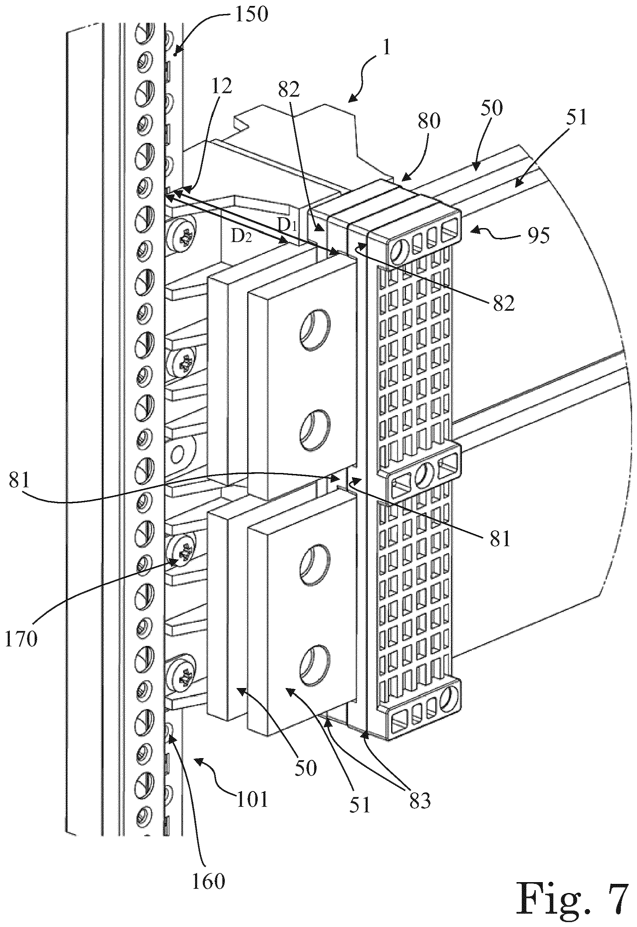

Figures 6 and 7 show, for example, the isolator 1 according to the embodiment shown by way of example in figures 1-3, wherein this isolator 1 is coupled with the respective framing element 101 according to the second operating position, and wherein the two first conductive bars 50 resting on the two respective bearing surfaces 20 and 21 are separated from the first wall 150 of the framing element 101 by the second minimum distance D₂. The two second conductive bars 51 are operatively coupled with the isolator 1 so as to e parallel to and facing the respective first conductive bars 50, and are separated from the first wall 150 by a distance substantially equal to the first minimum distance D₁.

In the example shown in figure 6, conductive elements, such as plates 90, are mounted on the first conductive bars 50, and in turn the two second conductive bars 51 are mounted on these conductive elements 90.

In particular, the thickness of the conductive elements 90 is such that the second conductive bars 51 mounted upon them are separated from the first wall 150 of the framing element 101 by a distance substantially equal to the first minimum distance D₁.

The first and second conductive bars 50 and 51 and the isolating elements 90 interposed between them are passed through by fixing means, such as screws 52, which are inserted in respective holes 53 defined in the bearing surfaces 20 and 21 of the isolator 1, so as to fix these conductive bars 50 and 51 to the isolator 1. Preferably, also in this case, isolating caps 54 are inserted onto the heads of the screws 52.

In the example shown in figure 7, the first isolating cover 80 is operatively coupled with the isolator 1, according to the method described above, so as to couple the two first conductive bars 50 with the isolator 1.

The two second faces 86 of the first isolating cover 80 constitute two bearing surfaces 86 on which the two second conductive bars 51 can be mounted parallel to and facing the respective first conductive bars 50.

In particular, the thickness between the first faces 87 and the second faces 86 of the first isolating cover 80 is such that the two second conductive bars 51 are separated from the first wall 150 of the framing element 101 by a distance substantially equal to the first minimum distance D₁.

Furthermore, a second isolating cover 95 is operatively coupled with the first isolating cover 80 so as to cover corresponding portions of the second conductive bars 51 and keep these bars 51 mounted on the respective bearing surfaces 86. In this way, the second conductive bars 51 are coupled with the isolator 1 by means of the second isolating cover 95.

The second isolating cover 95 illustrated in figure 7 is substantially equal to the first isolating cover 80, and its partitions 81, 82, 83 are positioned above the partitions 81, 82, 83 of the first isolating cover 80 and adapted to be passed through by fixing means, such as screws, which are inserted into respective holes 88 defined in the partitions 81, 82, 83 of the first isolating cover 80.

Also on the heads of these screws, protruding from the second isolating cover 95, it is preferable to place isolating caps, such as the isolating caps 54.

Preferably, with particular reference to figures 10 and 11, a first isolator 1a and a second isolator 1b according to the present invention are associated with each polarity of the electrical panel supply network. In particular, the first isolator 1a and the second isolator 1b are operatively coupled according to the first operating position or the second operating position with a first framing element 101a and a second framing element 101b, respectively, which are mounted parallel to one another and aligned in the frame 100 of the cabinet 200.

In this way, the first conductive bars 50 can be mounted on the respective bearing surfaces 20 and 21 of the first isolator 1a and the second isolator 1b, so that they extend between the first framing element 101a and the second framing element 101b.

In particular, in the case where the first isolator 1a and the second isolator 1b assume the first operating position, the first conductive bars 50 supported by them are separated from the first walls 150 of the first and second framing elements 101a, 101b by the first minimum distance D₁, as illustrated in figure 10.

In the case where the first isolator 1a and the second isolator 1b assume the second operating position, the first conductive bars 50 and the second conductive bars 51 supported by them are separated from the first walls 150 of the first and second framing elements 101a, 101b by the second minimum distance D₂ and by the first minimum distance D₁, respectively.

Isolators 1 associated with different polarities of the electricity supply network can be mounted on the same framing element 101 in contact with one another by means of their faces 5, 6; with reference to the isolator 1 illustrated for example in figures 1-3, the step-shape portion 7 defined on the face 5 of a first isolator 1 and the step-shape portion 8 defined on the face 6 of a second isolator 1 are shaped to be coupled with one another when the face 5 of the first isolator 1 is placed above the face 6 of the second isolator 1.

This coupling between the step-shape portions 7, 8 of isolators 1 piled on top of one another on the same framing element 101 reduces any unwanted movement of said isolators 1 in the event of strong stresses, for example due to a short-circuit current flowing in the conductive bars 50, 51.

Alternatively, the isolators 1 associated with different polarities of the electricity supply network can be mounted on the same framing element 101 separated from one another, so as to increase the electrical distance between the conductive bars 50, 51 and increase electrical performance.

The isolator 1 according to the present invention makes it possible to overcome the disadvantages present in the state-of-the-art.

In particular, this isolator 1 is adapted to be operatively coupled with the respective framing element 101 according to:
- the aforementioned first operating position, in which it can support only the first conductive bars 50, keeping them separated from the first wall 150 of the framing element 150 by the first minimum distance D₁; or
- the aforementioned second operating position, in which, compared to the first operating position, the first conductive bars 50 are set back towards the first wall 150 of the framing element 101 and the second conductive bars 51 can be added and assume the position previously occupied by the first conductive bars 50, i.e. at a distance from the first wall 150 equal to the first minimum distance D₁.

In this way, the same electrical connections sized to connect the electrical and/or electronic devices housed in the cabinet 200 to the first conductive bars 50, when the relative isolator 1 is coupled with the framing element 101 according to the first operating position, can also be advantageously used for the connection to the second conductive bars 51 supported by the isolator 1 when it is coupled with the framing element according to the second operating position.

Therefore, the isolator 1 permits greater versatility of use and eliminates the costs and interventions that would be required to replace or modify the electrical connections in the cabinet 200.

The isolator 1 thus conceived, and the relative cabinet 200 and electrical panel, are subject to modifications and variations that all fall within the scope of the inventive concept as defined in particular in the accompanying claims.

In particular, the number of first conductive bars 50 and/or second conductive bars 51 may be different from that illustrated.

In particular, the isolator 1 may support more than two first conductive bars 50 and relative second conductive bars 51; for example, the isolator 1 may have four bearing surfaces on which four first conductive bars 50 can be mounted and, for applications requiring large amounts of current, the number of bars supported may be doubled by adding four second conductive bars 51.

For example, in the case of applications requiring large amounts of current, the number of bars supported may be more than doubled, by adding above each first conductive bar 50 a plurality of second conductive bars 51 parallel and facing one another. In this case, the difference in height between the planes on which the first surface 10 and the second surface 12 of the isolator 1 lie must be such that the second conductive bar 51 mounted further from the respective first conductive bar 50 is positioned separated from the first wall 150 of the framing element 101 by the first minimum distance D1, when the third surface 12 and the fourth surface 13 are coupled with the respective first and second walls 150 and 151 of the framing element 101.

Furthermore, all the parts/components described can be replaced with other technically equivalent parts/components; in practice, any type of materials, and of any dimensions, may be used according to needs and the state of the art.

## Claims

1. Support isolator (1) for conductive bars (50, 51) in a cabinet (200) for an electrical panel, said cabinet (200) comprising at least one framing element (101) with a first wall (150) and a second wall (151) connected to one another transversally, said isolator (1) comprising at least one bearing surface (20, 21) on which a conductive bar (50) can be mounted, and **characterized in** comprising:
- a first surface (10) and a second surface (11) that are transversally connected to one another and adapted to be operatively coupled with said first wall (150) and said second wall (151) of the framing element (101), respectively; and
- a third surface (12) and a fourth surface (13) that are transversally connected to one another and adapted to be operatively coupled with said first wall (150) and said second wall (151) of the framing element (101), respectively;
wherein said first surface (10), said third surface (12) and said at least one bearing surface (20, 21) lie on planes parallel to one another, and the planes on which the first surface (10) and the third surface (12) lie are separated from one another, so that:
- following coupling of the first surface (10) and the second surface (11) with said first wall (150) and said second wall (151) of the framing element (101), said conductive bar (50) can be mounted on the bearing surface (20, 21) separated from the first wall (150) by a first minimum distance (D₁); and
- following coupling of the third surface (12) and the fourth surface (13) with said first wall (150) and said second wall (151) of the framing element (101), said conductive bar (50) can be mounted on the bearing surface (20, 21) separated from the first wall (150) by a second minimum distance (D₂), which is smaller than said first minimum distance (D₁).

2. Isolator (1) according to claim 1, wherein the plane on which said at least one bearing surface (20, 21) lies is separated from the planes on which said first surface (10) and third surface (12) lie, and the plane on which said third surface (12) lies is arranged between the planes on which said first surface (10) and said at least one bearing surface (20, 21) lie.

3. Isolator (1) according to claim 1 or claim 2, wherein said first and second surfaces (10, 11) and said third and fourth surfaces (12, 13) are defined in parts (2, 3) of the isolator (1) opposite one another with respect to said at least one bearing surface (20, 21).

4. Isolator (1) according to one or more of the previous claims, comprising:
- a fifth surface (14) transversally connected to said first surface (10) and adapted to be operatively coupled with a third wall (152) of the framing element (101) transversally connected to said first wall (150), when said first and second surfaces (10, 11) are operatively coupled with said first and second walls (150, 151); and
- a sixth surface (15) transversally connected to said second surface (11) and adapted to be operatively coupled with a fourth wall (153) of the framing element (101) transversally connected to said second wall (151), when said first and second surfaces (10, 11) are operatively coupled with said first and second walls (150, 151).

5. Isolator (1) according to one or more of the previous claims, comprising:
- a seventh surface (16) transversally connected to said third surface (12) and adapted to be operatively coupled with said third wall (152) of the framing element (101), when said third and fourth surfaces (12, 13) are operatively coupled with said first and second walls (150, 151); and
- an eighth surface (17) transversally connected to said fourth surface (13) and adapted to be operatively coupled with said fourth wall (153) of the framing element (101), when said third and fourth surfaces (12, 13) are operatively coupled with said first and second walls (150, 151).

6. Isolator (1) according to one or more of the previous claims, comprising a first face (5) and a second face (6) that are opposite each other and delimit the longitudinal extension of the isolator (1) along a main axis (500), said first, second, third and fourth surfaces (10, 11, 12, 13) extending along said main axis (500), and said first and second face (5, 6) comprise at least one step-shaped portion (7, 8).

7. Cabinet (200) for an electrical panel, comprising at least one framing element (101) with a first wall (150) and a second wall (151) connected to one another transversally and **characterized in** comprising at least one isolator (1) according to one or more of the claims 1-6, wherein a first conductive bar (50) is mounted on said at least one bearing surface (20, 21) of the isolator (1), and wherein:
- said first and second surfaces (10, 11) of the isolator (1) are operatively coupled with said first and second walls (150, 151) of the framing element (101), respectively, so that said first conductive bar (50) is separated from the first wall (150) by said first minimum distance (D₁); or
- said third and fourth surfaces (12, 13) of the isolator (1) are operatively coupled with said first and second walls (150, 151) of the framing element (101), respectively, so that said first conductive bar (50) is separated from the first wall (150) by said second minimum distance (D₂).

8. Cabinet (200) according to claim 7, wherein said first and second surfaces (10, 11) of the isolator (1) are operatively coupled with said first and second walls (150, 151) of the framing element (101), respectively, and wherein a first isolating cover (80) is operatively coupled with said isolator (1) so as to cover a respective portion of the first conductive bar (50) mounted on said at least one bearing surface (20, 21).

9. Cabinet (200) according to claim 7, wherein said first and second surfaces (10, 11) of the isolator (1) are operatively coupled with said first and second walls (150, 151) of the framing element (101), respectively, and wherein the first conductive bar (50) mounted on said at least one bearing surface (20, 21) is passed through by means (52) for fixing it to the isolator (1).

10. Cabinet (200) according to claim 7, wherein said third and fourth surfaces (12, 13) of the isolator (1) are operatively coupled with said first and second walls (150, 151) of the framing element (101), respectively, and wherein a second conductive bar (51) is operatively coupled with said isolator (1) parallel with and facing said first conductive bar (50) and separated from said first wall (150) of the framing element (101) by a minimum distance substantially equal to said first minimum distance (D₁).

11. Cabinet (200) according to claim 10, wherein a first isolating cover (80) is operatively coupled with said isolator (1) so as to cover a respective portion of said first conductive bar (50), said first isolating cover (80) comprising a first face (87) facing said first conductive bar (50), and a second face (86) that is opposite the first face (87) and defines a bearing surface (86) on which said second conductive bar (51) is mounted, wherein the thickness between said first face (87) and said second face (86) of the first isolating cover (80) is such that said second conductive bar (51) is separated from said first wall (150) of the framing element (101) by said minimum distance substantially equal to said first minimum distance (D₁).

12. Cabinet (200) according to claim 11, wherein a second isolating cover (95) is operatively coupled with said first isolating cover (80) so as to cover a respective portion of said second conductive bar (51).

13. Cabinet (200) according to claim 10, wherein at least one conducting element (90) is interposed between said first and second conductive bars (50, 51) and has a thickness such that the second conductive bar (51) is separated from said first wall (150) of the framing element (101) by said minimum distance substantially equal to the first minimum distance (D₁), said first and second conductive bars (50, 51) and said at least one conducting element (90) being passed through by means (52) for fixing them to the isolator (1).

14. Cabinet (200) according to one of the claims 7-13, wherein said at least one isolator (1) comprises at least one first isolator and a second isolator, and wherein said at least one step-shape portion (7) of the first face (5) of the first isolator (1) and said at least one step-shape portion (8) of the second face (6) of the second isolator (1) are coupled with one another.

15. Electrical panel **characterized in** comprising a cabinet (200) according to one or more of the claims 7-14.

## Patentansprüche

1. Stützisolator (1) für leitfähige Stangen (50, 51) in einem Schrank (200) für eine elektrische Schalttafel, wobei der Schrank (200) mindestens ein Rahmenelement (101) mit einer ersten Wand (150) und einer zweiten Wand (151), die miteinander transversal verbunden sind, umfasst, wobei der Isolator (1) mindestens eine Auflagefläche (20, 21) umfasst, auf der eine leitfähiger Stange (50) montiert werden kann, und **gekennzeichnet durch** das Umfassen von:
- einer ersten Oberfläche (10) und einer zweiten Oberfläche (11), die miteinander transversal verbunden sind und dafür angepasst sind, entsprechend mit der ersten Wand (150) und der zweiten Wand (151) des Rahmenelements (101) wirkgekoppelt zu werden; und
- einer dritten Oberfläche (12) und einer vierten Oberfläche (13), die miteinander transversal verbunden sind und dafür angepasst sind, entsprechend mit der ersten Wand (150) und der zweiten Wand (151) des Rahmenelements (101) wirkgekoppelt zu werden;
wobei die erste Oberfläche (10), die dritte Oberfläche (12) und die mindestens eine Auflagefläche (20, 21) auf Ebenen parallel zueinander liegen und die Ebenen, auf denen die erste Oberfläche (10) und die dritte Oberfläche (12) liegen, voneinander getrennt sind, sodass:
- folgend auf Koppeln der ersten Oberfläche (10) und der zweiten Oberfläche (11) mit der ersten Wand (150) und der zweiten Wand (151) des Rahmenelements (101) die leitfähige Stange (50) auf der Auflagefläche (20, 21) getrennt durch einen ersten Minimalabstand (D₁) von der ersten Wand (150) montiert werden kann; und
- folgend auf Koppeln der dritten Oberfläche (12) und der vierten Oberfläche (13) mit der ersten Wand (150) und der zweiten Wand (151) des Rahmenelements (101) die leitfähige Stange (50) auf der Auflagefläche (20, 21) getrennt durch einen zweiten Minimalabstand (D₂), der kleiner ist als der erste Minimalabstand (D₁), von der ersten Wand (150) montiert werden kann.

2. Isolator (1) nach Anspruch 1, wobei die Ebene, auf der die mindestens eine Auflagefläche (20, 21) liegt, von den Ebenen getrennt ist, auf denen die erste Oberfläche (10) und dritte Oberfläche (12) liegen, und die Ebene, auf der die dritte Oberfläche (12) liegt, zwischen den Ebenen angeordnet ist, auf denen die erste Oberfläche (10) und die mindestens eine Auflagefläche (20, 21) liegen.

3. Isolator (1) nach Anspruch 1 oder Anspruch 2, wobei die ersten und zweiten Ebenen (10, 11) und die dritten und vierten Ebenen (12, 13) in Teilen (2, 3) des Isolators (1), die in Bezug auf die mindestens eine Auflagefläche (20, 21) einander gegenüberliegen, definiert sind.

4. Isolator (1) nach einem oder mehreren der vorstehenden Ansprüche, umfassend:
- eine fünfte Oberfläche (14), die mit der ersten Oberfläche (10) transversal verbunden ist und dafür angepasst ist, mit einer dritten Wand (152) des Rahmenelements (101) wirkgekoppelt zu sein, die mit der ersten Wand (150) transversal verbunden ist, wenn die ersten und zweiten Oberflächen (10, 11) mit den ersten und zweiten Wänden (150, 151) wirkgekoppelt sind; und
- eine sechste Oberfläche (15), die mit der zweiten Oberfläche (11) transversal verbunden ist und dafür angepasst ist, mit einer vierten Wand (153) des Rahmenelements (101) wirkgekoppelt zu sein, die mit der zweiten Wand (151) transversal verbunden ist, wenn die ersten und zweiten Oberflächen (10, 11) mit den ersten und zweiten Wänden (150, 151) wirkgekoppelt sind.

5. Isolator (1) nach einem oder mehreren der vorstehenden Ansprüche, umfassend:
- eine siebte Oberfläche (16), die mit der dritten Oberfläche (12) transversal verbunden ist und dafür angepasst ist, mit der dritten Wand (152) des Rahmenelements (101) wirkgekoppelt zu sein, wenn die dritten und vierten Oberflächen (12, 13) mit den ersten und zweiten Wänden (150, 151) wirkgekoppelt sind; und
- eine achte Oberfläche (17), die mit der vierten Oberfläche (13) transversal verbunden ist und dafür angepasst ist, mit der vierten Wand (153) des Rahmenelements (101) wirkgekoppelt zu sein, wenn die dritten und vierten Oberflächen (12, 13) mit den ersten und zweiten Wänden (150, 151) wirkgekoppelt sind.

6. Isolator (1) nach einem oder mehreren der vorstehenden Ansprüche, umfassend eine erste Fläche (5) und eine zweite Fläche (6), die einander gegenüberliegen und die Längserstreckung des Isolators (1) entlang einer Hauptachse (500) begrenzen, wobei die ersten, zweiten, dritten und vierten Oberflächen (10, 11, 12, 13), die sich entlang der Hauptachse (500) erstrecken, und die ersten und zweiten Flächen (5, 6) mindestens einen stufenförmigen Abschnitt (7, 8) umfassen.

7. Schrank (200) für eine elektrische Schalttafel, umfassend mindestens ein Rahmenelement (101) mit einer ersten Wand (150) und einer zweiten Wand (151), die miteinander transversal verbunden sind, und **dadurch gekennzeichnet, dass** er mindestens einen Isolator (1) nach einem oder mehreren der Ansprüche 1-6 umfasst, wobei eine erste leitfähige Stange (50) auf der mindestens einen Auflagefläche (20, 21) des Isolators (1) montiert ist, und wobei:
- die ersten und zweiten Oberflächen (10, 11) des Isolators (1) entsprechend mit den ersten und zweiten Wänden (150, 151) des Rahmenelements (101) wirkgekoppelt sind, sodass die erste leitfähige Stange (50) durch den ersten Minimalabstand (D₁) von der ersten Wand (150) getrennt ist; oder
- die dritten und vierten Oberflächen (12, 13) des Isolators (1) entsprechend mit den ersten und zweiten Wänden (150, 151) des Rahmenelements (101) wirkgekoppelt sind, sodass die erste leitfähige Stange (50) durch den zweiten Minimalabstand (D₂) von der ersten Wand (150) getrennt ist.

8. Schrank (200) nach Anspruch 7, wobei die ersten und zweiten Oberflächen (10, 11) des Isolators (1) entsprechend mit den ersten und zweiten Wänden (150, 151) des Rahmenelements (101) wirkgekoppelt sind, und wobei eine erste isolierende Abdeckung (80) mit dem Isolator (1) wirkgekoppelt ist, um einen entsprechenden Abschnitt der ersten leitfähigen Stange (50), die auf der mindestens einen Auflagefläche (20, 21) montiert ist, zu bedecken.

9. Schrank (200) nach Anspruch 7, wobei die ersten und zweiten Oberflächen (10, 11) des Isolators (1) entsprechend mit den ersten und zweiten Wänden (150, 151) des Rahmenelements (101) wirkgekoppelt sind, und wobei die erste leitfähige Stange (50), die auf der mindestens einen Auflagefläche (20, 21) montiert ist, von Mitteln (52), die sie an dem Isolator (1) befestigt halten, durchdrungen ist.

10. Schrank (200) nach Anspruch 7, wobei die dritten und vierten Oberflächen (12, 13) des Isolators (1) entsprechend mit den ersten und zweiten Wänden (150, 151) des Rahmenelements (101) wirkgekoppelt sind, und wobei eine zweite leitfähige Stange (51) mit dem Isolator (1) parallel mit der und der ersten leitfähigen Stange (50) zugewandt wirkgekoppelt ist und von der ersten Wand (150) des Rahmenelements (101) durch einen Minimalabstand, der im Wesentlichen gleich dem ersten Minimalabstand (D₁) ist, getrennt ist.

11. Schrank (200) nach Anspruch 10, wobei eine erste isolierende Abdeckung (80) mit dem Isolator (1) wirkgekoppelt ist, um einen entsprechenden Abschnitt der ersten leitfähigen Stange (50) zu bedecken, wobei die erste isolierende Abdeckung (80) eine erste Fläche (87), die der ersten leitfähigen Stange (50) zugewandt ist, und eine zweite Fläche (86), die der ersten Fläche (87) gegenüberliegt und eine Auflagefläche (86) definiert, auf der die zweite leitfähige Stange (51) montiert ist, umfasst, wobei die Dicke zwischen der ersten Fläche (87) und der zweiten Fläche (86) der ersten isolierenden Abdeckung (80) so ist, dass die zweite leitfähige Stange (51) von der ersten Wand (150) des Rahmenelements (101) durch den Minimalabstand, der im Wesentlichen gleich dem ersten Minimalabstand (D₁) ist, getrennt ist.

12. Schrank (200) nach Anspruch 11, wobei eine zweite isolierende Abdeckung (95) mit der ersten isolierenden Abdeckung (80) wirkgekoppelt ist, um einen entsprechenden Abschnitt der zweiten leitfähigen Stange (51) zu bedecken.

13. Schrank (200) nach Anspruch 10, wobei mindestens ein leitfähiges Element (90) zwischen den ersten und zweiten leitfähigen Stangen (50, 51) eingefügt ist und eine solche Dicke hat, dass die erste leitfähige Stange (51) von der ersten Wand (150) des Rahmenelements (101) durch den Minimalabstand, der im Wesentlichen gleich dem ersten Minimalabstand (D₁) ist, getrennt ist, wobei die ersten und zweiten leitfähigen Stangen (50, 51) und das mindestens eine leitfähige Element (90) von Mitteln (52), die sie an dem Isolator (1) befestigt halten, durchdrungen sind.

14. Schrank (200) nach einem der Ansprüche 7-13, wobei der mindestens eine Isolator (1) mindestens einen ersten Isolator und einen zweiten Isolator umfasst, und wobei der mindestens eine stufenförmige Abschnitt (7) der ersten Fläche (5) des ersten Isolators (1) und der mindestens eine stufenförmige Abschnitt (8) der zweiten Fläche (6) des zweiten Isolators (1) miteinander gekoppelt sind.

15. Elektrische Schalttafel, die **dadurch gekennzeichnet ist, dass** sie einen Schrank (200) nach einem oder mehreren der Ansprüche 7-14 umfasst.

## Revendications

1. Support isolateur (1) pour des barres conductrices (50, 51) dans une armoire (200) pour un panneau électrique, ladite armoire (200) comprenant au moins un élément d'encadrement (101) pourvu d'une première paroi (150) et d'une deuxième paroi (151) reliées l'une à l'autre de manière transversale, ledit isolateur (1) comprenant au moins une surface d'appui (20, 21), sur laquelle une barre conductrice (50) peut être montée, **caractérisé en ce qu'**il comprend:
- une première surface (10) et une deuxième surface (11), qui sont reliées de manière transversale l'une à l'autre et sont adaptées pour être couplées de manière fonctionnelle à ladite première paroi (150) et à ladite deuxième paroi (151) de l'élément d'encadrement (101), respectivement ; et
- une troisième surface (12) et une quatrième surface (13), qui sont reliées de manière transversale l'une à l'autre et sont adaptées pour être couplées de manière fonctionnelle à ladite première paroi (150) et à ladite deuxième paroi (151) de l'élément d'encadrement (101), respectivement ;
dans lequel ladite première surface (10), ladite troisième surface (12) et l'au moins une surface d'appui (20, 21) se trouvent dans des plans parallèles les uns par rapport aux autres, et les plans, sur lesquels la première surface (10) et la troisième surface (12) se trouvent, sont séparés les uns des autres de sorte que :
- après le couplage de la première surface (10) et de la deuxième surface (11) avec ladite première paroi (150) et ladite deuxième paroi (151) de l'élément d'encadrement (101), ladite barre conductrice (50) peut être montée sur la surface d'appui (20, 21) séparée de la première paroi (150) par une première distance minimale (D₁) ; et
- après le couplage de la troisième surface (12) et de la quatrième surface (13) avec ladite première paroi (150) et ladite deuxième paroi (151) de l'élément d'encadrement (101), ladite barre conductrice (50) peut être montée sur la surface d'appui (20, 21) séparée de la première paroi (150) par une deuxième distance minimum (D₂), qui est plus petite que ladite première distance minimum (D₁).

2. Isolateur (1) selon la revendication 1, dans lequel le plan sur lequel l'au moins une surface d'appui (20, 21) se trouve est séparé des plans sur lesquels ladite première surface (10) et ladite troisième surface (12) se trouvent, et le plan, sur lequel ladite troisième surface (12) se trouve est agencé entre les plans sur lesquels ladite première surface (10) et l'au moins une surface d'appui (20, 21) se trouvent.

3. Isolateur (1) selon la revendication 1 ou la revendication 2, dans lequel lesdites première et deuxième surfaces (10, 11) et lesdites troisième et quatrième surfaces (12, 13) sont définies en tant que parties (2, 3) de l'isolateur (1) opposées les unes aux autres par rapport à l'au moins une surface d'appui (20, 21).

4. Isolateur (1) selon l'une quelconque des revendications précédentes, comprenant :
- une cinquième surface (14) reliée de manière transversale à ladite première surface (10) et adaptée pour être couplée de manière fonctionnelle à une troisième paroi (152) de l'élément d'encadrement (101) relié de manière transversale à ladite première paroi (150), quand lesdites première et deuxième surfaces (10, 11) sont couplées de manière fonctionnelle auxdites première et deuxième parois (150, 151) ; et
- une sixième surface (15) reliée de manière fonctionnelle à ladite deuxième surface (11) et adaptée pour être couplée de manière fonctionnelle à une quatrième paroi (153) de l'élément d'encadrement (101) relié de manière transversale à ladite deuxième paroi (151), quand lesdites première et deuxième surfaces (10, 11) sont couplées de manière fonctionnelle auxdites première et deuxième parois (150, 151).

5. Isolateur (1) selon l'une ou plusieurs des revendications précédentes, comprenant :
- une septième surface (16) reliée de manière transversale à ladite troisième surface (12) et adaptée pour être couplée de manière fonctionnelle à ladite troisième paroi (152) de l'élément d'encadrement (101), quand lesdites troisième et quatrième surfaces (12, 13) sont couplées de manière fonctionnelle auxdites première et deuxième parois (150, 151) ; et
- une huitième surface (17) reliée de manière transversale à ladite quatrième surface (13) et adaptée pour être couplée de manière fonctionnelle à ladite quatrième paroi (153) de l'élément d'encadrement (101), quand lesdites troisième et quatrième surfaces (12, 13) sont couplées de manière fonctionnelle auxdites première et deuxième parois (150, 151).

6. Isolateur (1) selon l'une quelconque des revendications précédentes, comprenant une première face (5) et une deuxième face (6) qui sont opposées l'une à l'autre et délimitent l'extension longitudinale de l'isolateur (1), le long d'un axe principal (500), lesdites première, deuxième, troisième et quatrième surfaces (10, 11, 12, 13) s'étendant le long dudit axe principal (500), et lesdites première et deuxième surfaces (5, 6) comprennent au moins une partie (7, 8) de forme étagée.

7. Armoire (200) pour un panneau électrique, comprenant au moins un élément d'encadrement (101) avec une première paroi (150) et une deuxième paroi (151) reliées l'une à l'autre de manière transversale, et **caractérisée en ce qu'**elle comprend au moins un isolateur (1) selon l'une quelconque des revendications 1 - 6, dans laquelle une première barre conductrice (50) est montée sur l'au moins une surface d'appui (20, 21) de l'isolateur (1), et dans laquelle :
- lesdites première et deuxième surfaces (10, 11) de l'isolateur (1) sont couplées de manière fonctionnelle auxdites première et deuxième parois (150, 151) de l'élément d'encadrement (101), respectivement, de telle sorte que ladite première barre conductrice (50) est séparée de la première paroi (150) par ladite première distance minimale (D₁) ; ou
- lesdites troisième et quatrième surfaces (12, 13) de l'isolateur (1) sont couplées de manière fonctionnelle auxdites première et deuxième parois (150, 151) de l'élément d'encadrement (101), respectivement, de sorte que ladite première barre conductrice (50) est séparée de la première paroi (150) par ladite deuxième distance minimale (D₂).

8. Armoire (200) selon la revendication 7, dans laquelle lesdites première et deuxième surfaces (10, 11) de l'isolateur (1) sont couplées de manière fonctionnelle auxdites première et deuxième parois (150, 151) de l'élément d'encadrement (101) respectivement, et dans laquelle un premier recouvrement isolant (80) est couplé de manière fonctionnelle audit isolateur (1) de manière à recouvrir une partie respective de la première barre conductrice (50) montée sur l'au moins une surface d'appui (20, 21).

9. Armoire (200) selon la revendication 7, dans laquelle lesdites première et deuxième surfaces (10, 11) de l'isolateur (1) sont couplées de manière fonctionnelle auxdites première et deuxième parois (150, 151) de l'élément d'encadrement (101), respectivement, et dans laquelle la première barre conductrice (50) montée sur l'au moins une surface d'appui (20, 21) est passée à travers par des moyens (52) pour la fixer à l'isolateur (1).

10. Armoire (200) selon la revendication 7, dans laquelle lesdites troisième et quatrième surfaces (12, 13) de l'isolateur (1) sont couplées de manière fonctionnelle auxdites première et deuxième parois (150, 151) de l'élément d'encadrement (101), respectivement, et dans laquelle une deuxième barre conductrice (51) est couplée de manière fonctionnelle audit isolateur (1) parallèle à face à la première barre conductrice (50) et séparée de ladite première paroi (150) de l'élément d'encadrement (101) par une distance minimale sensiblement égale à ladite première distance minimale (D₁).

11. Armoire (200) selon la revendication 10, dans laquelle un premier recouvrement isolant (80) est couplé de manière fonctionnelle audit isolateur (1) de manière à recouvrir une partie respective de ladite première barre conductrice (50), ledit premier recouvrement (80) comprenant une première face (87) faisant face à ladite première barre conductrice (50), et une deuxième face (86) qui est opposée à la première face (87) et définit une surface d'appui (86) sur laquelle ladite deuxième barre conductrice (51) est montée, dans laquelle l'épaisseur entre ladite première face (87) et ladite deuxième face (86) du premier recouvrement isolant (80) est telle que ladite deuxième barre conductrice (51) est séparée de ladite première paroi (150) de l'élément d'encadrement (101) par ladite distance minimale sensiblement égale à ladite première distance minimale (D₁).

12. Armoire (200) selon la revendication 11, dans laquelle un deuxième recouvrement isolant (95) est couplé de manière fonctionnelle audit premier recouvrement isolant (80) de manière à recouvrir une partie respective de ladite deuxième barre conductrice (51).

13. Armoire (200) selon la revendication 10, dans laquelle au moins un élément conducteur (90) est intercalé entre lesdites première et deuxième barres conductrices (50, 51) et présente une épaisseur telle que la deuxième barre conductrice (51) est séparée de ladite première paroi (150) de l'élément d'encadrement (101) par ladite distance minimale sensiblement égale à la première distance minimale (D₁), lesdites première et deuxième barres conductrices (50, 51) et l'au moins un élément conducteur (90) étant passés à travers par des moyens (52) pour les fixer à l'isolateur (1).

14. Armoire (200) selon l'une quelconque des revendications 7 à 13, dans laquelle l'au moins un isolateur (1) comprend au moins un premier isolateur et un deuxième isolateur et dans laquelle l'au moins une partie (7) de forme étagée de la première face (5) du premier isolateur (1) et l'au moins une partie (8) de forme étagée de la deuxième face (6) du deuxième isolateur (1) sont couplées l'une à l'autre.

15. Panneau électrique **caractérisé en ce qu'**il comprend une armoire (200) selon l'une ou plusieurs des revendications 7 à 14.
